# EUROPEAN PATENT SPECIFICATION

(11) **EP 2 340 992 B1**
(45) Date of publication and mention of the grant of the patent: **01.06.2016**
(21) Application number: 10252243.0
(22) Date of filing: 29.12.2010
(51) Int. Cl.: B64C 11/14

(54) **Method for propeller blade root flow control by airflow through spinner**
Verfahren zur Kontrolle der Strömung im Bereich der Propellerblattwurzel mittels Luftströmung durch den Spinner
Procédé pour contrôle de débit d'emplanture de pales d'hélice par flux d'air au travers d'une casserole

(30) Priority: 29.12.2009 US 648859
(43) Date of publication of application: 06.07.2011
(73) Proprietor: Hamilton Sundstrand Corporation, Windsor Locks, CT 06096-1010 (US)
(72) Inventor: Henze, Chad M., Granby, CT 06035 (US)
(74) Representative: Hall, Matthew Benjamin

(56) References cited:
- US-A- 2 575 415
- US-A- 2 719 592
- US-A1- 2003 113 205
- US-A1- 2004 179 941

## Description

The present invention is directed to propeller blades and spinners for use in aircraft propulsion systems such as turboprop engines. More particularly, the present invention relates to flow of air between roots of propeller blades near inner diameter spinners.

Turboprop engines are well suited to large payload capacity cargo planes due to their high propulsive efficiency, i.e. their ability to turn power into usable thrust, which results in high fuel efficiency. In turboprop gas turbine engines, a turbine is used to drive large diameter propeller blades at speeds slower than at which the turbine rotates. In a typical configuration, a gas turbine engine comprising a compressor and a turbine is used to sustain a combustion process and produce hot gas for driving a free turbine. The free turbine, in turn, is used to drive a gearbox that rotates a hub on which the propeller blades are mounted at their roots. In order to maintain engine efficiency during flight, turboprop engines are operated at a constant, peak-efficiency speed. A spinner, which comprises an aerodynamic faring, is mounted at the inner diameter ends of the propeller blades to cover the hub and reduce drag.

As thrust and fuel efficiency demands on modem engines grow, the number of propeller blades is being increased. These increases, however, reduce the gap between adjacent blades, as there is limited circumferential area around the hub and spinner to space additional blades. The reduction in gap size, however, produces drag and the potential for choked flow conditions near the inner diameter ends of the propeller blades as the air becomes constricted. Previous attempts to control airflow near the blade roots involved contouring the surface of the spinner to manipulate the air velocity, often using expensive manufacturing processes. For example, the spinner is shaped to prevent choking by increasing the flow area to slow the velocity of airflow over the spinner and between the propeller blades to subsonic levels. However, as more propeller blades are used, there is less surface area of the spinner available to increase the flow area and induce other flow alterations. There is, therefore, a need for improving control over blade root flow.

US 2004/0179941 relates to a turboprop engine with engine air intakes on the nacelle designed as NACA intakes.

US 2719592 relates to a means for cooling the reservoir structure of a hydraulically operated variable pitch propeller. It teaches a propeller blade root airflow system for an aircraft propulsion system, the airflow system comprising: a spinner for shrouding a propeller hub and a plurality of propeller roots; a plurality of root holes disposed about a circumference of the spinner for receiving propeller roots; and a plurality of airflow ducts disposed about a circumference of the spinner for drawing air into the spinner and away from the root holes; wherein the airflow ducts of the plurality of airflow ducts are interspersed between root holes of the plurality of root holes.

According to one aspect, the present invention is characterised by an air intake inlet positioned at a nose of the spinner, and wherein each airflow duct of the plurality of airflow ducts comprises a NACA air intake duct.

According to another aspect, the present invention provides an aircraft propulsion system comprising: a gas turbine engine for producing rotation of a shaft; a gearbox connected to the shaft; a propeller hub connected to the gearbox and a propeller blade root airflow system as claimed in claim 1, wherein the system comprises propeller blades each having one of the plurality of propeller roots, each propeller blade comprising an air foil portion for producing propulsive thrust in an airstream.

According to another aspect, the present invention provides a method for preventing choked flow conditions between adjacent propeller blades in the area of a spinner in a propulsion system, the method comprising: rotating the spinner and propeller blades to produce propulsive thrust by driving an air stream past the propeller blades and spinner; and drawing a portion of the air stream into a plurality of ducts disposed within the spinner to prevent choked flow conditions; wherein the ducts of the plurality of ducts are inter-dispersed between root holes within the spinner configured to receive propeller root portions; an air intake inlet is positioned at a nose of the spinner; and wherein each of the plurality of ducts has a NACA air intake duct shape.

Thus, the present invention is directed to systems and methods for controlling flow conditions between blade root portions of propeller blades used in propulsion systems. A propeller blade root airflow control system comprises a spinner for shrouding a propeller hub and propeller roots. The spinner has root holes and airflow ducts. The root holes are disposed about a spinner circumference for receiving propeller roots. The airflow ducts are disposed about a spinner circumference for drawing air into the spinner and away from the root holes. A method for preventing choked flow conditions between adjacent propeller blades in the area of a spinner in a propulsion system comprises rotating the spinner and propeller blades to produce propulsive thrust by driving an air stream past the propeller blades and spinner, and drawing a portion of the air stream into a plurality of ducts disposed within the spinner to prevent choked flow conditions.

Preferred embodiments of the present invention will now be described by way of example only and with reference to the accompanying drawings, in which:
FIG. 1 shows a perspective view of a propulsion system for an aircraft showing a spinner airflow system of the present invention; and
FIG. 2 shows a schematic cross-section of the propulsion system of FIG. 1 showing airflow through the spinner airflow system and the propulsion system.

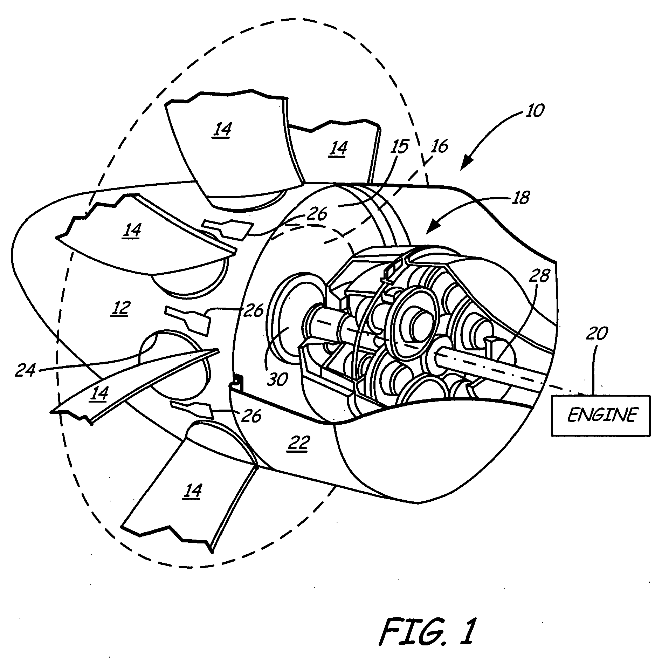

FIG. 1 shows a perspective view of propulsion system 10 having spinner 12 of the present invention. Propulsion system 10 includes spinner 12, propeller blades 14, bulkhead 15, hub 16, gearbox 18, gas turbine engine 20 and nacelle 22. Spinner 12 includes root holes 24, for receiving blade root portions of propeller blades 14, and airflow ports 26, for adjusting flow of air passing between propeller blades 14. Gas turbine engine 20 powers a free turbine that rotates shaft 28, as is conventionally known. Shaft 28 drives gearbox 18, which rotates shaft 30. Gearbox 18 comprises a gear reduction system that rotates shaft 30 at a slower rate than at which shaft 28 rotates. Shaft 30 drives a hub 16 (shown in phantom) located forward of bulkhead 15. The inner diameter root portions of propeller blades 14 are connected to hub 16. Spinner 12 is mounted to hub 16 and bulkhead 15 and includes holes 24 through which the root portions of propeller blades 14 extend to connect to sockets in hub 16. Spinner 12 comprises an aerodynamically shaped body, such as a shroud, faring or cowling, that covers root portions of propeller blades 14 and rotates with hub 16 and bulkhead 15. Engine 20 rotates bulkhead 15 and hub 16 to produce propulsive thrust with propeller blades 14. Propeller blades 14 comprise airfoils that push air past nacelle 22 when rotated by shaft 30. The airfoils are contoured to accelerate air traveling across the surfaces of propeller blades 14. Likewise, spinner 12 is contoured to promote flow of air over the outer surface of spinner 12. As such, the shapes of airfoils 14 and spinner 12 are carefully designed to promote efficient airflow and to prevent unfavorable flow conditions.

Air traveling between propeller blades 14 can reach sonic speeds where choked conditions may occur. In particular, choking is more likely to occur at the root portions of propeller blades 14 near spinner 12. Spinner 12 comprises the innermost boundary for air flowing past propeller blades 14 and the position where the area between adjacent propeller blades 14 is at a minimum. Thus, air flowing between propeller blades 14 is most likely to become constricted in the vicinity of spinner 12. There is, therefore, potential for choked flow conditions, particularly at high aircraft speeds. During choked flow conditions, the volume of air being driven by propeller blades 14 is greater than what the space between adjacent propeller blades 14 allows to flow unrestricted. Choked flow produces drag and shock waves that reduce the efficiency of propulsion system 10.

Airflow ports 26 comprise openings within spinner 12 that provide alternate flow paths for air flowing between propeller blades 14. Airflow ports 26 comprise shallow ramps that siphon air off of spinner 12 and discharge the air into the interior of spinner 12. Airflow ports 26 are positioned on spinner 12 so as to draw in air at positions around spinner 12 where air flow has the potential to become choked or constricted. Thus, airflow ports 26 are positioned on spinner 12 near root portions of propeller blades 14 and near holes 24. In one embodiment, airflow ports 26 are disposed between adjacent holes 24 such that airflow ports 26 and root holes 24 alternate around a circumference of spinner 12, as shown in FIG. 1. However, in other embodiments airflow ports 26 may be positioned forward or aft of holes 24 or directly in front of holes 24.

In any embodiment, airflow ports 26 are positioned to draw in air that would otherwise become choked when attempting to flow between adjacent propeller blades 14 under choked flow conditions. The number of airflow ports 26 and the surface area of spinner 12 that they encompass are selected to allow a sufficient amount of airflow into spinner 12 to prevent choked conditions from arising at each propeller 14. In one embodiment, the number of airflow ports 26 equals the number of propeller blades 14 or holes 24. The total surface area of airflow ports 26 is not so large so as to produce unacceptable efficiency losses of propeller blades 14. For example, efficiency losses due to ports 26 are less than the efficiency losses from drag produced by choked flow at the root portions of propeller blades 14. Thus, airflow ports 26 are shaped so as to minimize drag and disruption of air flowing around spinner 12. In the embodiment shown, airflow ports 26 comprise ducts having narrow inlet portions and wider outlet portions. In one particular embodiment, airflow ports 26 comprise duct inlets developed by the National Advisory Committee for Aeronautics (NACA), as are known in the art. These NACA ducts are described fully in "An Experimental Investigation of NACA Submerged-Duct Entrances" by Charles W. Frick, Wallace F. Davis, Lauros M. Randall and Emmet A. Mossman, Ames Aeronautical Laboratory, Moffett Field, California, 1945 (NACA ACR 5120).

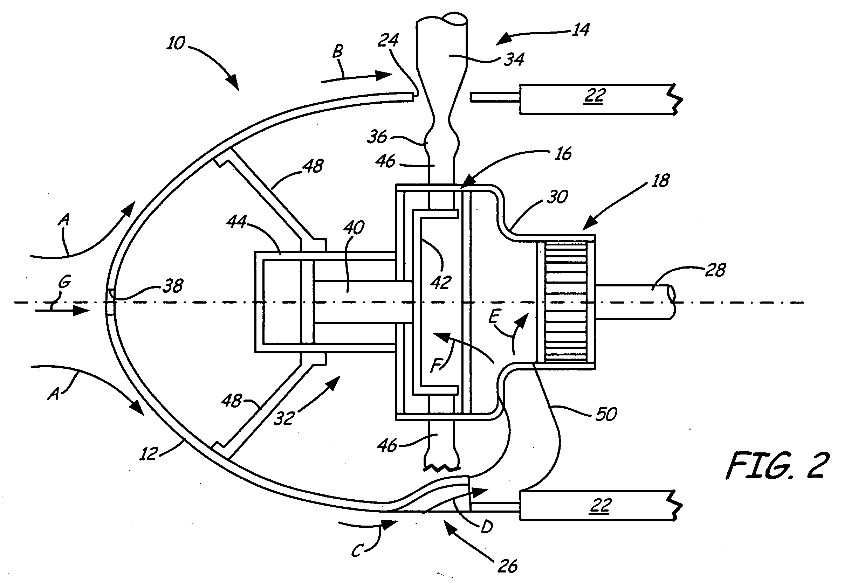

The air, once introduced to the interior of spinner 12 can be used for a variety of purposes. For example, air from airflow ports 26 can be used to cool various engine components. Such aspects of the present invention are better described with reference to FIG. 2.

FIG. 2 shows a cross-section of propulsion system 10 of FIG. 1. Propulsion system 10 includes spinner 12, propeller blades 14, hub 16, gearbox 18, nacelle 22, shaft 30 and blade pitch actuation mechanism 32. Propeller blades 14 include airfoil portion 34 and root portion 36. Spinner 12 includes root holes 24, airflow ports 26 and cooling hole 38. In the embodiment shown, blade pitch actuation mechanism 32 includes actuator piston 40, actuator arms 42 and piston cylinder 44. Although positioned between spinner 12 and shaft 30, bulkhead 15 is omitted for simplicity.

Propulsion system 10 comprises a forward oriented turboprop, or puller prop, configuration. Nacelle 22 is mounted to gas turbine engine 20 (FIG. 1) and provides an aerodynamic protective body for propulsion system 10. Shaft 28 extends from engine 20 and connects to gearbox 18. Shaft 30 extends from gearbox 18 and connects to an aft side of hub 16. Actuation mechanism 32 is mounted to a forward side of hub 16. Hub 16 includes a plurality of sockets for receiving stems 46 of propeller blades 14. As such, shaft 30, hub 16, propeller blades 14 and actuation mechanism 32 are rotated as a unit by gearbox 18. Spinner 12 is connected to the rotating unit, such as by brackets 48 that connect to actuation mechanism 32. In other embodiments, brackets may extend directly between spinner 12 and hub 16 in addition to or alternatively to brackets 48. Spinner 12 rotates in front of nacelle 22, which remains stationery with respect to engine 20.

In one embodiment, spinner 12 comprises a parabolic nose portion in which cooling hole 38 is disposed, and a cylindrical aft portion in which holes 24 and ports 26 are disposed. Holes 24 are provided in spinner 12 to allow blade root portions 36 of propeller blades 14 to extend through spinner 12 such that airfoil portions 34 extend into the air surrounding system 10. Holes 26 and 38 are provided in spinner 12 to allow airflow into the interior of propulsion system 10. Spinner 12 may also be shaped to manipulate airflow over its surfaces. For example, the portion of spinner 12 near airfoils 34 of propeller blades 14 can be contoured to increase surface area to slow the flow of air over spinner 12 to prevent choking.

Propeller blades 14 are rotated about shaft 30 to produce thrust and drive propulsion system 10 in a forward direction. As such, air streams A flow over spinner 12. Blade pitch actuation mechanism 32 adjusts the pitch of propeller blades 14 to adjust the angle of incidence of airflow A over the surfaces of airfoil portions 34. For example, propeller blades 14 can be adjusted between a reverse thrust position and a low drag feather position. Actuation mechanism 32 is controlled by a central engine controller such as a FADEC (Full Authority Digital Engine Controller) to adjust the pitch of propeller blades 14 as desired during operation of propulsion system 10. Actuation mechanism 32 comprises any conventional system for adjusting the pitch of propeller blades in turboprop systems as are known in the art. In various embodiments, actuation mechanism 32 comprises actuation and control systems such as are described in U.S. Pat. No. 6,811,376 to Arel et al., U.S. Pat. No. 6,981,844 to Perkinson et al. and U.S. Pat. No. 7,172,391 to Carvalho, which are assigned to Hamilton Sundstrand, Windsor Locks, CT. In typical embodiments, a pump (not shown) provides a pressurized hydraulic fluid to piston cylinder 44, which causes actuator piston 40 to undergo an axial displacement. Axial displacement of cylinder 44 causes rotation of actuator arms 42. Displacement of actuator arms 42 causes propeller stems 46 to rotate in the sockets of hub 16 such that the pitch of airfoil portions 34 is adjusted.

During operation of propulsion system 10, air streams A travel along the surface of spinner 12 toward propeller blades 14. Likewise, other air streams are generated in the space surrounding spinner 12 that travel at high velocities toward propeller blades 14. A convergence of air streams occurs near spinner 12 and airfoil portions 34 of propeller blades 14. For example, air stream B, which is incident on one of propeller blades 14, must be directed around the propeller to flow between adjacent propeller blades. As such, the potential for choked flow conditions arises near the intersection of spinner 12 with airfoils 34. In order to reduce the potential for choked flow, airflow ports 26 are positioned around spinner 12 to provide additional flow paths for air flowing around spinner 12. For example, air stream C is able to penetrate spinner 12 at airflow port 26 to enter the interior of spinner 12. Airflow port 26 comprises an inwardly sloped indentation of spinner 12 that terminates in a planar opening perpendicular to the direction of motion of propulsion system 10, as is typical in NACA inlet ducts. In other embodiments, however, airflow ports 26 may comprise simple openings, bores or holes in spinner 12 similar to that of propeller holes 24. Thus, airflow ports 26 relieve some of the air flow burden from the space between adjacent propeller blades 14.

Flow of air into airflow ports 26 is induced by the shape of ports 26, which draw or suck air into spinner 12. Airflow ports 26 can be provided with appropriate ductwork to connect ports 26 to various portions of system 10. In the embodiment shown, duct 50 connects to airflow ports 26 to route air stream D toward components inside of propulsion system 10 that benefit from cooling. For example, air stream E can be used to cool lubricating fluid used in gearbox 18 or routed aft to cool engine components within the nacelle 22, and air stream F can be used to cool hydraulic fluid used in actuation mechanism 32. In various embodiments, other types and shapes of ducts can be used to connect ports 26 to different parts of system 10, including ductwork for passing through bulkhead 15.

Additionally, spinner 12 is provided with other holes or intake inlets to allow air into propulsion system 10 to perform various functions. For example, cooling hole 38 allows air into spinner 12 to cool other systems of propulsion system 10. Cooling hole 38 is positioned at the nose or tip of spinner 12 along the axis of rotation of shaft 30 to allow air stream G, which is mostly incident on the tip of spinner 12, to enter the interior of spinner 12. Air stream G can be used to cool piston cylinder 44 by direct convection, or can be routed by appropriate ductwork to cool other components. Cooling hole 38, however, adds aerodynamic drag to spinner 12, and could be replaced by airflow ports 26.

Spinner 12 provides a platform into which various air inlets are provided to improve propulsion efficiency and cooling in propulsion system 10. Airflow ports 26, when operated in conjunction with the systems and methods of the present invention, prevent choked flow conditions from arising between propeller blades 14 near spinner 12, increasing the overall efficiency of propulsion system 10. Air introduced into spinner 12 from ports 26 can be used to provide cooling to propulsion system 10 or air to gas turbine engine 20. The airflow system and method of the present invention allow large numbers of propeller blades 14 to be mounted through spinner 12 and allow the speeds of the aircraft to which propulsion system 10 is attached to be increased. Furthermore, the need for expensive manufacturing of spinner 12, arising from machining and shaping of the root region of spinner 12, can be reduced or eliminated with the airflow system and method of the present invention.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A propeller blade root airflow system for an aircraft propulsion system (10), the airflow system comprising:
a spinner (12) for shrouding a propeller hub (16) and a plurality of propeller roots (36);
a plurality of root holes (24) disposed about a circumference of the spinner for receiving propeller roots; and
a plurality of airflow ducts (26) disposed about a circumference of the spinner for drawing air into the spinner and away from the root holes; wherein the airflow ducts (26) of the plurality of airflow ducts (26) are interspersed between root holes (24) of the plurality of root holes (24);
**characterised by** an air intake inlet (38) positioned at a nose of the spinner (12); and
wherein each airflow duct (26) of the plurality of airflow ducts (26) comprises a NACA air intake duct.

2. A propeller blade root airflow system as claimed in claim 1 wherein the spinner (12) includes ductwork (50) connected to each of the plurality of airflow ducts (26) that extends into an interior of the spinner.

3. A propeller blade root airflow system as claimed in any preceding claim, wherein the spinner (12) is aerodynamically contoured to increase flow area between the plurality of root holes (24) and the plurality of airflow ducts (26).

4. An aircraft propulsion system (10) comprising:
a gas turbine engine (20) for producing rotation of a shaft (28);
a gearbox (18) connected to the shaft;
a propeller hub (16) connected to the gearbox; and
a propeller blade root airflow system as claimed in any preceding claim;
wherein the system comprises propeller blades each having one of the plurality of propeller roots (36), each propeller blade comprising an airfoil portion (34) for producing propulsive thrust in an air stream.

5. An aircraft propulsion system (10) as claimed in claim 4 and further comprising:
a blade-pitch actuation mechanism (32) disposed within the spinner body (12) and connected to the propeller roots (36) of the plurality of propeller blades (14);
wherein a portion of the air (F) drawn into the spinner by the plurality of ducts (26) provides cooling to the blade-pitch actuation mechanism.

6. An aircraft propulsion system as claimed in claim 4 or 5, wherein the plurality of ducts (26) comprise shallow ramps and are sized to draw a sufficient portion of the air flow (C) into the spinner to prevent choked flow conditions between adjacent blade portions (14).

7. An aircraft propulsion system as claimed in claim 4 and further comprising:
an engine nacelle (22) shrouding the gas turbine engine and adjoining the spinner body (12);
wherein a portion of the air (C) drawn into the spinner by the plurality of ducts (26) is directed to an area within the engine nacelle.

8. An aircraft propulsion system as claimed in claim 4 wherein the spinner body (12) includes:
an aft cylindrical portion disposed about the hub (16) that comprises the plurality of root holes (24) and the plurality of ducts (26); and
a forward conical nose portion for shielding the propeller roots (36) and the hub from oncoming airflow.

9. A method for preventing choked flow conditions between adjacent propeller blades (14) in the area of a spinner (12) in a propulsion system (10), the method comprising:
rotating the spinner and propeller blades to produce propulsive thrust by driving an air stream past the propeller blades and spinner; and
drawing a portion of the air stream (C) into a plurality of ducts (26) disposed within the spinner to prevent choked flow conditions;
wherein the ducts of the plurality of ducts are inter-dispersed between root holes (24) within the spinner configured to receive propeller root portions (36); an air intake inlet (38) is positioned at a nose of the spinner; and wherein each of the plurality of ducts (26) has a NACA air intake duct shape.

10. A method as claimed in claim 9 wherein the spinner (12) is aerodynamically contoured to increase flow area between the propeller blades (14).

11. A method as claimed in claim 9 or 10 and further comprising:
cooling a component of the propulsion system (10) with the portion of the air stream (E,F) sucked into the spinner (12).

## Patentansprüche

1. Propellerschaufelfuß-Luftströmungssystem für ein Luftfahrzeugvortriebssystem (10), wobei das Luftströmungssystem Folgendes umfasst:
einen Spinner (12) zum Bedecken einer Propellernabe (16) und einer Mehrzahl von Propellerfüßen (36);
eine Mehrzahl von Fußlöchern (24), die um einen Umfang des Spinners angeordnet sind, um Propellerfüße aufzunehmen; und
eine Mehrzahl von Luftströmungskanälen (26), die um einen Umfang des Spinners angeordnet sind, um Luft in den Spinner und fort von den Fußlöchern zu saugen; wobei die Luftströmungskanäle (26) der Mehrzahl von Luftströmungskanälen (26) zwischen den Fußlöchern (24) der Mehrzahl von Fußlöchern (24) verteilt sind;
**gekennzeichnet durch** einen Lufteinlass (38), der an einer Nase des Spinners (12) angeordnet ist; und
wobei jeder Luftströmungskanal (26) der Mehrzahl von Luftströmungskanälen (26) einen NACA-Lufteinlasskanal umfasst.

2. Propellerschaufelfuß-Luftströmungssystem nach Anspruch 1, wobei der Spinner (12) Kanäle (50) beinhaltet, die mit jeweiligen der Mehrzahl von Luftströmungskanälen (26) verbunden sind, die sich in ein Inneres des Spinners erstrecken.

3. Propellerschaufelfuß-Luftströmungssystem nach einem der vorangehenden Ansprüche, wobei der Spinner (12) aerodynamisch konturiert ist, um die Strömungsfläche zwischen der Mehrzahl von Fußlöchern (24) und der Mehrzahl von Luftströmungskanälen (26) zu erhöhen.

4. Luftfahrzeugvortriebssystem (10), umfassend:
einen Gasturbinenmotor (20) zum Erzeugen der Drehung einer Welle (28);
ein Getriebe (18), das mit der Welle verbunden ist;
eine Propellernabe (16), die mit dem Getriebe verbunden ist; und
ein Propellerblattwurzel-Luftströmungssystem nach einem der vorangehenden Ansprüche;
wobei das System Propellerschaufeln umfasst, die jeweils einen der Mehrzahl der Propellerfüße (36) aufweisen, wobei jede Propellerschaufel einen Tragflächenabschnitt (34) zum Erzeugen von Vorschub in einem Luftstrom umfasst.

5. Luftfahrzeugvortriebssystem (10) nach Anspruch 4 und ferner umfassend:
einen Schaufelanstellwinkelstellmechanismus (32), der in dem Spinnerkörper (12) angeordnet ist und mit den Propellerfüßen (36) der Mehrzahl von Propellerschaufeln (14) verbunden ist;
wobei ein Teil der Luft (F), der durch die Mehrzahl von Kanälen (26) in den Spinner gesaugt wird, Kühlung für den Schaufelanstellwinkelstellmechanismus bereitstellt.

6. Luftfahrzeugvortriebssystem nach Anspruch 4 oder 5, wobei die Mehrzahl von Kanälen (26) flache Rampen umfasst und dazu abgemessen ist, einen ausreichenden Teil des Luftstroms (C) in den Spinner zu saugen, um gedrosselte Strömungsbedingungen zwischen benachbarten Schaufelabschnitten (14) zu verhindern.

7. Luftfahrzeugvortriebssystem nach Anspruch 4 und ferner umfassend:
eine Motorgondel (22), die den Gasturbinenmotor umgibt und neben dem Spinnerkörper (12) angeordnet ist;
wobei ein Teil der Luft (C), die von der Mehrzahl von Kanälen (26) in den Spinner gesaugt wird, in den Bereich in der Motorgondel gelenkt wird.

8. Luftfahrzeugvortriebssystem nach Anspruch 4, wobei der Spinnerkörper (12) Folgendes beinhaltet:
einen hinteren zylindrischen Abschnitt, der um die Nabe (16) angeordnet ist und die Mehrzahl von Fußlöchern (24) und die Mehrzahl von Kanälen (26) umfasst; und
einen vorderen konischen Nasenabschnitt zum Abschirmen der Propellerfüße (36) und der Nabe vor dem herankommenden Luftstrom.

9. Verfahren zum Verhindern von gedrosselten Strömungsbedingungen zwischen benachbarten Propellerschaufeln (14) im Bereich eines Spinners (12) in einem Vortriebssystem (10), wobei das Verfahren Folgendes umfasst:
Drehen des Spinners und der Propellerschaufeln, um durch Treiben eines Luftstroms an den Propellerschaufeln und dem Spinner vorbei Vorschub zu erzeugen; und
Saugen eines Teils des Luftstroms (C) in eine Mehrzahl von Kanälen (26), die in dem Spinner angeordnet sind, um gedrosselte Strömungsbedingungen zu verhindern;
wobei die Kanäle der Mehrzahl von Kanälen zwischen Fußlöchern (24) in dem Spinner verteilt und konfiguriert sind, Propellerfußabschnitte (36) aufzunehmen; ein Lufteinlass (38) an einer Nase des Spinners angeordnet ist; und wobei jeder der Mehrzahl von Kanälen (26) eine NACA-Lufteinlasskanalform aufweist.

10. Verfahren nach Anspruch 9, wobei der Spinner (12) aerodynamisch konturiert ist, um die Strömungsfläche zwischen den Propellerschaufeln (14) zu erhöhen.

11. Verfahren nach Anspruch 9 oder 10 und ferner umfassend:
Kühlen einer Komponente des Vortriebssystems (10) mit dem Teil des Luftstroms (E, F), der in den Spinner (12) gesaugt wird.

## Revendications

1. Système de flux d'air d'emplanture de pales d'hélice pour un système de propulsion d'aéronef (10), le système de flux d'air comprenant :
une casserole (12) pour caréner un moyeu d'hélice (16) et une pluralité d'emplantures d'hélice (36) ;
une pluralité de trous d'emplanture (24) disposés autour d'une circonférence de la casserole pour recevoir des emplantures d'hélice ; et
une pluralité de conduits de flux d'air (26) disposés autour d'une circonférence de la casserole pour aspirer l'air dans la casserole et en l'éloignant des trous d'emplanture ; dans lequel les conduits de flux d'air (26) de la pluralité de conduits de flux d'air (26) sont intercalés entre des trous d'emplanture (24) de la pluralité de trous d'emplanture (24) ;
**caractérisé par** une entrée d'admission d'air (38) positionnée au niveau d'un nez de la casserole (12) ; et
dans lequel chaque conduit de flux d'air (26) de la pluralité de conduits de flux d'air (26) comprend un conduit d'admission d'air NACA.

2. Système de flux d'air d'emplanture de pales d'hélice selon la revendication 1, dans lequel la casserole (12) comprend un réseau de conduits (50) relié à chacun de la pluralité de conduits de flux d'air (26) qui s'étend dans un intérieur de la casserole.

3. Système de flux d'air d'emplanture de pales d'hélice selon une quelconque revendication précédente, dans lequel la casserole (12) est profilée de manière aérodynamique pour augmenter une section de passage entre la pluralité de trous d'emplanture (24) et la pluralité de conduits de flux d'air (26).

4. Système de propulsion d'aéronef (10) comprenant :
un moteur à turbine à gaz (20) pour produire une rotation d'un arbre (28) ;
une boîte d'engrenages (18) reliée à l'arbre ;
un moyeu d'hélice (16) relié à la boîte d'engrenages ; et
un système de flux d'air d'emplanture de pales d'hélice selon une quelconque revendication précédente ;
dans lequel le système comprend des pales d'hélice ayant chacune une de la pluralité d'emplantures d'hélice (36), chaque pale d'hélice comprenant une partie à profil aérodynamique (34) pour produire une poussée propulsive dans un courant d'air.

5. Système de propulsion d'aéronef (10) selon la revendication 4 et comprenant en outre :
un mécanisme d'actionnement de pas de pale (32) disposé à l'intérieur du corps de casserole (12) et relié aux emplantures d'hélice (36) de la pluralité de pales d'hélice (14) ;
dans lequel une partie de l'air (F) aspirée dans la casserole par la pluralité de conduits (26) fournit un refroidissement au mécanisme d'actionnement de pas de pale.

6. Système de propulsion d'aéronef selon la revendication 4 ou 5, dans lequel la pluralité de conduits (26) comprennent des rampes peu profondes et sont dimensionnés pour aspirer une partie suffisante du flux d'air (C) dans la casserole pour empêcher des conditions d'écoulement réduit entre des parties de pales adjacentes (14).

7. Système de propulsion d'aéronef selon la revendication 4 et comprenant en outre :
une nacelle de moteur (22) carénant le moteur à turbine à gaz et contiguë au corps de casserole (12) ;
dans lequel une partie de l'air (C) aspirée dans la casserole par la pluralité de conduits (26) est dirigée vers une zone à l'intérieur de la nacelle de moteur.

8. Système de propulsion d'aéronef selon la revendication 4, dans lequel le corps de casserole (12) comprend :
une partie cylindrique arrière disposée autour du moyeu (16) qui comprend la pluralité de trous d'emplanture (24) et la pluralité de conduits (26) ; et
une partie nez conique avant pour protéger les emplantures d'hélice (36) et le moyeu du flux d'air qui arrive.

9. Procédé destiné à empêcher des conditions d'écoulement réduit entre des pales d'hélice adjacentes (14) dans la zone d'une casserole (12) dans un système de propulsion (10), le procédé comprenant :
la rotation de la casserole et des pales d'hélice pour produire une poussée propulsive en faisant passer un courant d'air devant les pales d'hélice et la casserole ; et
l'aspiration d'une partie du courant d'air (C) dans une pluralité de conduits (26) disposés à l'intérieur de la casserole pour empêcher des conditions d'écoulement réduit ;
dans lequel les conduits de la pluralité de conduits sont intercalés entre des trous d'emplanture (24) à l'intérieur de la casserole configurée pour recevoir des parties d'emplantures d'hélice (36) ;
une entrée d'admission d'air (38) est positionnée au niveau d'un nez de la casserole ; et dans lequel chacun de la pluralité de conduits (26) a une forme de conduit d'admission d'air NACA.

10. Procédé selon la revendication 9 dans lequel la casserole (12) est profilée de manière aérodynamique pour augmenter une section de passage entre les pales d'hélice (14).

11. Procédé selon la revendication 9 ou 10 et comprenant en outre :
le refroidissement d'un composant du système de propulsion (10) avec la partie du courant d'air (E, F) aspirée dans la casserole (12).
